# EUROPÄISCHE PATENTSCHRIFT

(11) **EP 0 458 224 B1**
(45) Veröffentlichungstag und Bekanntmachung des Hinweises auf die Patenterteilung: **28.09.1994**
(21) Anmeldenummer: 91108071.1
(22) Anmeldetag: 18.05.1991
(51) Int. Cl.: E03F 5/10, E02B 7/20, G05D 7/01

(54) **Segment-Schwimmer-Drossel**
Segmental throttle with float
Dispositif d'étranglement en forme de segment commandé par flotteur

(30) Priorität: 21.05.1990 DE 4016376
(43) Veröffentlichungstag der Anmeldung: 27.11.1991
(73) Patentinhaber: Kraus, Karl, D-79777 Ühlingen-Birkendorf (DE)
(72) Erfinder: Kraus, Karl, D-79777 Ühlingen-Birkendorf (DE)
(74) Vertreter: Raeck, Wilfrid, Dipl.-Ing.

(56) Entgegenhaltungen:
- DE-A- 3 038 098
- DE-A- 3 108 440
- DE-A- 3 418 347
- DE-A- 3 822 555
- DE-A- 3 914 702

## Beschreibung

Die Erfindung betrifft eine Abflußregelung für Regenspeicherbecken oder dergleichen Staubehälter, mit einer Abflußleitung, einem den Querschnitt der Abflußleitung verändernden Unterwasser-Drosselorgan und einer vor dem UW-Drosselorgan angeordneten, einen Unterwasser-Schwimmer enthaltenden Schwimmerkammer, in der ein künstlicher Aufstau erzeugt wird, sobald der Behälterabfluß einen vorbestimmten Wert, z.B. 2 x QTW übersteigt, wobei der UW-Schwimmer als Antrieb für eine bei Verstopfungen vor dem UW-Drosselorgan ansprechende und dieses über sein Betätigungsgestänge öffende Notauslöseeinrichtung vorgesehen ist.

Bei einer in der DE 39 14 702 A1 beschriebenen Abflußmengenregelung der vorstehend bezeichneten Art enthält eine als Reglerraum bezeichnete Schwimmerkammer eine Zulauföffnung und eine Ablauföffnung, denen jeweils eine Drosselblende zugeordnet ist. Ein im Reglerraum angeordneter Schwimmer trägt eine zur Ausführung vertikaler Bewegungen geführte Stellplatte, auf deren beiden Seiten je eine schlitzförmige Steuerkurve für ein Führungsglied angeordnet ist. Die Führungsglieder sind jeweils an einem Ende zweier im Reglerraum gelagerter Kipphebel angebracht, deren andere Enden über Seile oder Gelenkstangen jeweils mit einer der Drosselblenden verbunden sind. Die mit Schwimmer und Stellplatte vertikal bewegten Steuerkurven haben einen zur Verstellung der beiden Drosselblenden festgelegten Verlauf, durch die Drosselblenden in Schließrichtung verstellt werden, wenn die Behälterabflußmenge einen vorbestimmten Wert übersteigt und dann im Reglerraum ein den Schwimmer auftreibender Aufstau entsteht. Mit zunehmendem Aufstau im Reglerraum wird aufgrund unterschiedlicher Ausbildung beider Steuerkurven die Drosselblende des Zulaufs weiter als die Drosselblende des Ablaufes geschlossen. Die Steuerkurve für die Auslauf-Drosselblende bewirkt mit einem stärker gekrümmten unteren Endbereich, daß bei einer kritischen Aufstauhöhe im Reglerraum diese Drosselblende zunächst hochgezogen wird und aufgrund des dann abfließenden Aufstaus in ihre Regelstellung zurückkehrt, wodurch eine Verstopfung im Reglerraum beseitigt werden kann.

Der Erfindung liegt die Aufgabe zugrunde, eine fremdenergiefreie Abflußregelung der eingangs bezeichneten Art zu verbessern und eine Regelung zu schaffen wobei der UW-Schwimmer der in der Schwimmerkammer variierenden Aufstauhöhe weitestgehend unbehindert folgt und dadurch ständig für ein schnelles Ansprechverhalten der über seine Bewegungen betätigten Regel- und Steuerglieder sowie zur wartungsfreien automatischen Freispülung zur Verfügung steht.

Diese Aufgabe wird gemäß einer ersten Ausführungsform der Erfindung dadurch gelöst,
- daß in einem zwischen Behälterablauf und Schwimmerkammer angeordneten Zulaufkanal ein einstellbarer Schütz vorgesehen ist,
- daß der UW-Schwimmer und der Schütz über ein um ein Festlager schwenkbares Wiegegestänge zur Ausführung gegenläufiger Bewegungen so verbunden sind, daß der Schütz bei steigendem Aufstau in der Schwimmerkammer schließend und bei fallendem Aufstau öffnend verstellt wird,
- und daß eine als Antrieb zwischen dem Schütz und dem gleichsinnig bewegten UW-Drosselorgan dienende Verbindungseinrichtung eine um ein Festlager schwenkbare Betätigungsstange aufweist, die an ihrem dem UW-Drosselorgan entgegengesetzten Ende durch eine am Schütz befestigte, die Ausflußformel für sich ändernde Behälterstauhöhen berücksichtigende Korrekturkurve geführt ist.

Wenn bei dieser Bauform mit steigendem Füllstand im Staubehälter dessen Abflußmenge zunimmt und vor dem auf einen bestimmten Abflußwert eingestellten UW-Drosselorgan in der Schwimmerkammer ein Aufstau entsteht, führt der UW-Schwimmer eine Aufwärtsbewegung aus, die über die Hebelarme des Wiegegestänges in eine feinfühlige gegenläufige, d.h. drosselnde Absenkbewegung des Schützes umgewandelt wird. Indem der Schütz den Zulauf zur Schwimmerkammer auf einen Wert drosselt, bei dem eine mittlere Aufstauhöhe in der Schwimmerkammer erhalten bleibt, folgt der UW-Schwimmer weiterhin dem mit sich änderndem Behälterabfluß variierenden Aufstau. Die Verstellbewegungen des Schützes werden mit Hilfe der am Schütz befestigten Ausfluß-Korrekturkurve und der daran geführten schwenkbaren Betätigungsstange gleichsinnig, jedoch korrigiert auf das UW-Drosselorgan übertragen. Die Regelung des UW-Drosselorgans erfolgt somit in Abhängigkeit von den durch den UW-Schwimmer eingeleiteten Verstellbewegungen des Schützes, der durch seine Drosselwirkung auf die Höhe des Aufstaus in der Schwimmerkammer eine Vorregelung in dem Sinne ermöglicht, daß stärkere Änderungen des Behälterabflusses sehr schnell geringere Änderungen des Aufstaus in der Schwimmerkammer verursachen, womit bei hoher Empfindlichkeit bzw. geringer Ansprechzeit dennoch ein stetiges Regelverhalten erreicht wird.

Die obengenannte Aufgabe wird gemäß einer zweiten Ausführungsform der Erfindung dadurch gelöst,
- daß eine Antriebsverbindung zwischen einem der Behälterstauhöhe folgenden Oberwasser-Schwimmer und dem UW-Drosselorgan eine die Ausflußformel für sich ändernde Behälterstauhöhen berücksichtigende Korrekturkurve enthält,
- daß in einem zwischen Behälterablauf und Schwimmerkammer angeordneten Zulaufkanal ein einstellbarer Schütz vorgesehen ist,
- und daß der UW-Schwimmer und der Schütz über ein um ein Festlager schwenkbares Wiegegestänge zur Ausführung gegenläufiger Bewegungen so verbunden sind, daß der Schütz bei steigendem Aufstau in der Schwimmerkammer schließend und bei fallendem Aufstau öffnend verstellt wird.

Diese Abflußregelung, die bevorzugt für Kleinstmengen z.B. von 3 l/s eingesetzt wird, umfaßt zu diesem Zweck zur Betätigung des UW-Drosselorgans einen auf sich änderende Füllstände im Staubehälter unmittelbar ansprechenden Oberwasser-Schwimmer. Sie ist wie die zuerst beschriebene Bauform mit einem im Zulaufkanal zwischen Behälterablauf und Schwimmerkammer angeordneten Schütz sowie mit einem den Schütz über ein empfindliches Wiegegestänge gegenläufig antreibenden UW-Schwimmer versehen, mit deren Hilfe die erwünschte Wartungsfreiheit erreicht wird, der wegen der bei kleinen Abflußmengen und/ oder geringem Gefälle bestehenden erhöhten Verstopfungsgefahr große Bedeutung zukommt. Zu Verstopfungen führende Ablagerungen vor dem UW-Drosselorgan werden dadurch beseitigt, daß bei einer Überschreitung der vom OW-Schwimmer bestimmten Aufstauhöhe in der Schwimmerkammer der UW-Schwimmer eine das UW-Drosselorgan öffnende Notauslöseeinrichtung betätigt. Ablagerungen vor dem Schütz werden ebenfalls selbsttätig aufgrund des dann absinkenden Aufstaus der Schwimmerkammer und der daraus über das Wiegegestänge folgenden Öffnungsbewegung des Schützes weggespült.

Zweckmäßigerweise liegt an der vom OW-Schwimmer entsprechend den Änderungen der Behälterstauhöhe mittels einer Gelenkhebelverbindung verstellbaren Korrekturkurve ein die Öffnugnsweite des UW-Drosselorgans direkt steuernder Hebel an und ist an dieser geführt.

Die erfindungsgemäße Abflußregelung wird dadurch weiter ausgestaltet, daß dem Wiegegestänge eine Bewegungen des Schützes in Schließrichtung in dem Fall begrenzende Anschlagkurve zugeordnet ist, daß der Aufstau in der Schwimmerkammer aus einer Verstopfung vor dem UW-Drosselorgan resultiert, wobei das Wiegegestänge einen Freilauf enthält, der bei Anlage des Wiegegestänges an der Anschlagkurve voneinander unabhängige Bewegungen des Schützes und des des UW-Schwimmers ermöglicht. Die Anschlagkurve sorgt somit dafür, daß bei einer Verstopfung vor dem UW-Drosselorgan der Schütz die Zulauföffnung zur Schwimmerkammer genügend weit offen läßt, um den Freispüleffekt zu sichern.

Vorzugsweise wird die Anschlagkurve in Abhängig von der Stellung des OW-Schwimmers selbsttätig derart nachgestellt, daß die Öffnungsgröße des Schützes einen den beabsichtigten Aufstau in der Schwimmerkammer erhaltenden Wert nicht unterschreitet.

Der Freilauf kann beispielsweise dadurch verwirklicht sein, daß das Wiegegestänge aus zwei um eine gemeinsame ortsfeste Gelenkachse schwenkbaren, sich teilweise überdeckenden und in der einen Schwenkrichtung durch einen Anschlag zusammengehaltenen Teillenkern besteht, die bei Entlastung des UW-Schwimmers und Unterstützung des Schützes durch die Anschlagkurve gegensinnig schwenkbar bzw. zueinander knickbar sind und dabei die Notauslöseeinrichtung betätigen.

Bei beiden Ausführungsformen der erfindungsgemäßen Abflußregelung kann die Notauslöseeinrichtung aus einem vom UW-Schwimmer angetriebenen Betätigungsorgan und einer mit dem Antriebsgestänge des UW-Drosselorgans in Verbindung stehenden Kupplungseinrichtung bestehen, welche die Anstiegsbewegung des UW-Schwimmers in eine Öffnungsbewegung des UW-Drosselorgans umsetzt.

Da die Lage des Antriebsgestänges für das UW-Drosselorgan bzw. sein Abstand vom Betätigungsorgan des UW-Schwimmers sich bei varrierendem Behälterfüllstand ändert, kann zur diesbezüglichen Kompensation die Notauslöseeinrichtung ein vom OW-Schwimmer verstellbares Keilelement enthalten, das zwischen dem Antriebsgestänge für das UW-Drosselorgan und dem vom UW-Schwimmer angetriebenen Betätigungsorgan angeordnet ist.

In Weiterbildung der Abflußregelung nach der Erfindung wird vorgeschlagen, daß die dem UW-Drosselorgan und dem Schütz zugeordneten Korrektur- bzw. Anschlagkurven sowie das über dem Betätigungsorgan des UW-Schwimmers angeordnete Keilelement zu gleichsinnigen Bewegungen miteinander verbunden sind.

Um bei geringen z.B. unterhalb von 20 l/s liegenen Abflußmengen und besonders bei längeren Drosselzeiten entstehende Ablagerungen und Schmutz aus der Drosselleitung und/oder aus dem Staubehälter herauszubringen und zur Kläranlage zu leiten, wird vorgeschlagen, daß zur Erzielung kurzer Spülstöße während Zeiten geringer Abflüsse dem UW-Drosselorgan ein Kurzzeit-Zwangsöffnungssystem zugeordnet ist, das einen aufziehbaren Stellmotor, ein die Spülstoßfrequenz bestimmendes aufziehbares Zeitglied zum Auslösen des Stellmotors und eine fremdenergiefreie Aufzieheinrichtung aufweist, die aus einem in der Schwimmerkammer angeordneten Schwimmer und einem den Schwimmer mit dem Stellmotor und Zeitglied verbindenden Zugglied besteht und durch die der Zwangsöffnung des UW-Drosselorgans und Entleerung der Schwimmerkammer folgende Absenkbewegung des Schwimmers betätigbar ist.

Zweckmäßigerweise besteht der einstellbare Schütz aus einem um eine waagerechte Achse schwenkbaren Segmentschütz.

Ausführungsbeispiele der Abflußregelung gemäß der Erfindung sind nachfolgend anhand der Zeichnungen näher erläutert. Es zeigen, jeweils schematisch,
- Fig. 1: eine Seitenansicht einer ersten Ausführungsform der Abflußregelung gemäß der Erfindung,
- Fig. 2: ein Ausführungsbeispiel eines den UW-Schwimmer und Segmentschütz verbindenden Wiegebalkens mit einer Notauslöseeinrichtung zum Öffnen des UW-Drosselorgans,
- Fig. 2a: Einzelheiten des Freilaufes im Wiegebalkens von Fig. 2,
- Fig. 3: einen Vertikalschnitt durch einen Staubehälter mit einer darin angeordneten Abflußregelung ähnlich Fig. 1 in vereinfachter Darstellung und
- Fig. 4: eine Seitenansicht einer zweiten Ausführungsform der Abflußregelung gemäß der Erfindung.

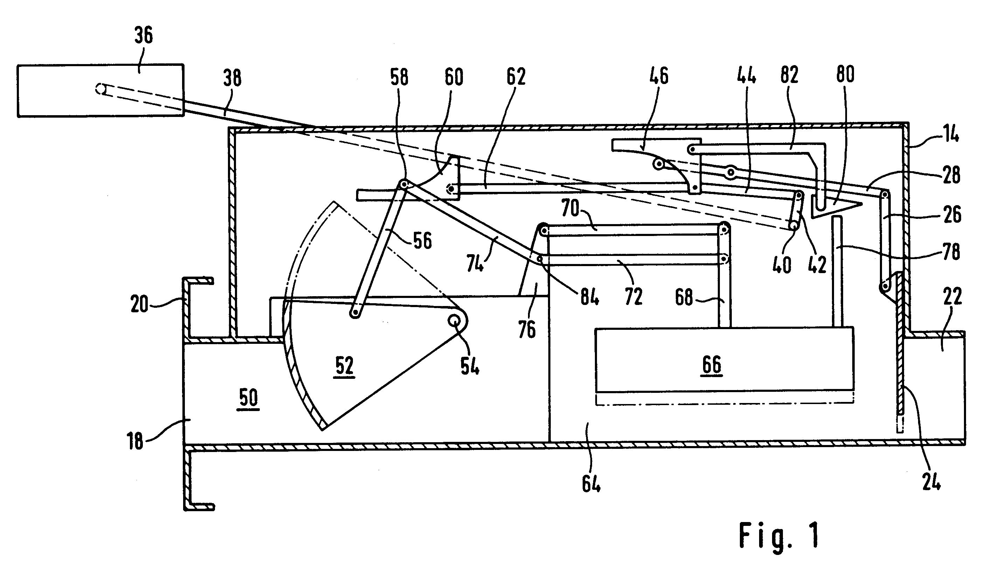

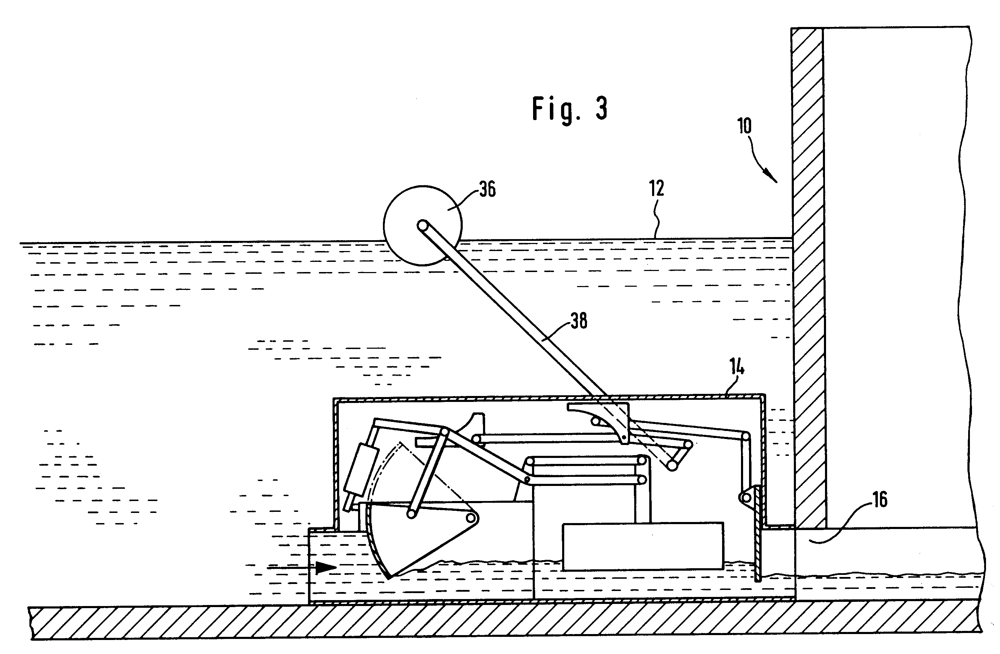

Entsprechend Fig. 1 und 3 befindet sich auf dem Oberwasserspiegel 12 eines Staubehälters 10 ein Schwimmer 36, der über eine Stellstange 38 an eine in der Seitenwand des Schachtgehäuses 14 gelagerte Schwenkwelle 40 angeschlossen ist. Das z.B. aus Metall bestehende Schachtgehäuse 14 kann in einem nicht gezeigten, vom Staubehälter unabhängigen Schacht oder entsprechend Fig. 3 platzsparend auf der Sohle des Staubehälters aufgestellt werden.

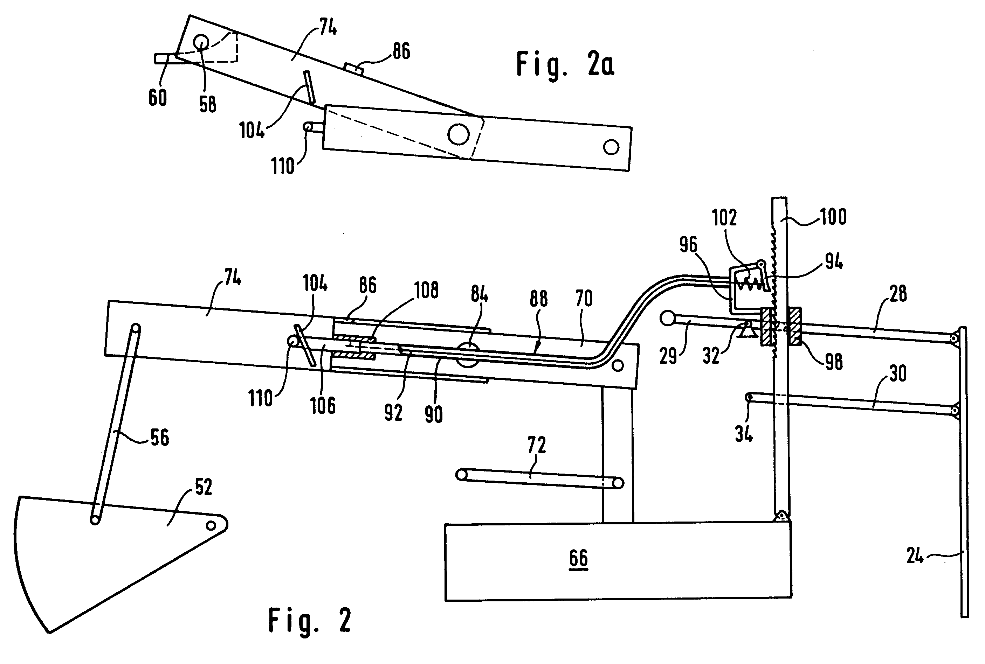

Das Schachtgehäuse 14 besitzt gemäß Fig. 1 an der linken Seite eine Einlaßöffnung 18, die von einem Einlaßflansch 20 zum Anschluß an eine Abflußleitung oder an die Außenwand eines Staubehälters umgeben ist. Vor dem Schachtauslaß 22 ist ein Unterwasser-Drosselorgan in Form einer senkrecht geführten Drosselblende 24 angeordnet. Die Blende wird über ein nach oben führendes Gestänge 26 und vorzugsweise über zwei Parallelführungslenker 28, 30 (Fig. 2) parallel geführt. Die Lenker 28, 30 haben ortsfeste Schwenkachsen 32, 34. Der obere Lenker 28 besitzt jenseits seiner Schwenkachse 32 ein freies Ende 29, das an einer Korrekturkurve 46 geführt ist, welche die Ausflußgesetzmäßigkeiten für die Behälterstauhöhe berücksichtigt. Die gezeigte Art der Korrekturkurve und die Verbindung zum Unterwasser-Drosselorgan 24 kann durch andere gleichwirkende Maßnahmen ersetzt werden.

Zur Regelung der Blende 24 dient eine auf der Schwenkwelle 40 befestigte Kurbel 42, über die ein an der Korrekturkurve 46 angreifender Lenker 44 betätigt wird. Die Kurve 46 ist in nicht gezeigten Führungen des Schachtgehäuses 14 so geführt, daß das freie Ende 29 des Betätigungshebels 28 an der Kurve 46 bei abnehmender Stauhöhe im Behälter 10 nach rechts und somit an den steilen Bereich der Kurve 46 gelangt, um die Blende 24 zu öffnen.

An den Schachteinlaß 18 schließt sich ein Zulaufkanal 50 an, in dem ein Segmentschütz 52 um eine waagerechte Achse 54 schwenkbar gelagert ist. Der Segmentschütz 52 ist mittels eines Lenkers oder eines Bügels 56 an der Stelle 58 an einen Wiegebalken angehängt. Der Wiegebalken besteht aus zwei normalerweise zueinander starren Teillenkern 72 und 74, die auf einer gemeinsamen Schwenkachse 84 einer ortsfesten Lagerstütze 76 schwenkbar sind. Der das rechte Ende des Wiegebalkens bildende Teillenker 72 ist an einen oberen Ansatz 68 eines UW-Schwimmers 66 schwenkbar angeschlossen, der in einer Schwimmerkammer 64 vor der Blende 24 angeordnet ist. Mit Hilfe der Blende 24 und des Segmentschützes 52 entsteht in der Schwimmerkammer ein künstlicher Aufstau, sobald der Behälterabfluß einen vorbestimmten Mindestwert, z.B. die zweifach Trockenwetterabflußmenge übersteigt. Aus diesem Aufstau wird die Antriebskraft zur Bewegung des UW-Schwimmers abgeleitet, der über den Segmentschütz zur Feinregelung und zur selbsttätigen Beseitigung von Verstopfungen wirksam ist.

Der Schwimmer 66 ist vorzugsweise durch die Parallellenker 70, 72 zu sich selbst parallel geführt. Die Aufhängung des Segmentschützes 52 umfaßt eine Anschlagkurve 60, an der er mittels einer Gleitrolle 58 des Lenkers 56 gehalten ist. Wenn im Falle einer Verstopfung vor der Blende 24 der Aufstau in der Schwimmerkammer 64 ansteigt, der die Aufwärtsbewegung des UW-Schwimmers die Drosselbewegung des Schützes 52 veranlaßt, wird der Schütz bei Aufsitzen der Gleitrolle 58 auf der Anschlagkurve 60 an einer weiteren Absenkbewegung gehindert. Auf diese Weise bleibt auch bei geringen Behälterabflüssen die Durchflußmenge, im Zulaufkanal 50 groß genug, um die Verstopfung vor der Blende 24 freizuspülen, nachdem ein gemäß Fig. 1 auf der Oberseite des Schwimmers 66 schematisch angedeutetes Betätigungsorgan 78 an einen in Querrichtung verstellbaren Keil 80 anstößt und über das Betätigungsgestänge 28 die Blende 24 öffnet.

Fig. 2 zeigt als Variante dieser Notauslöseeinrichtung eine auf der Oberseite des UW-Schwimmers 66 gelenkig gehaltene Betätigungsstange 100, die eine Sperrverzahnung trägt und in einer mit dem Lenker 28 verbundenen Hülse 98 geführt ist. Der Sperrverzahnung ist eine Rastklinke 94 zugeordnet, die an einem von der Hülse 98 ausgehenden Halter 96 mit ihrem oberen Ende schwenkbar gelagert ist und unter der Wirkung einer am Halter 96 abgestützten Vorspannfeder 102 mit der Sperrverzahnung in Eingriff gehalten wird. Die Rastklinke 94 ist mit dem Drahtseil 92 eines Bowden-Zuges 88 verbunden.

In Fig. 2 bildet der obere Parallellenker 70 den rechten Teillenker des Wiegebalkens, der um ein Festlager 84 zusammen mit dem linken Teillenker 74 schwenkbar und an den Segmentschütz 52 angeschlossen ist. Beide Teillenker 70, 74 befinden sich unter der Last des angehängten Segmentschützes 52 in gestrecktem Zustand, der durch den Anschlag 86 am Teillenker 74 aufrecht erhalten wird. Wenn die bei der Aufwärtsbewegung des Schwimmers 66 verursachte Abwärtsbewegung des Segmentschützes 52 durch Anlage der Gleitrolle 58 an der Anschlagkurve 60 begrenzt wird, knicken die Teillenker 70, 74 des Wiegebalkens gemäß Fig. 2a ein, so daß der Mitnehmerbügel 110 sich von dem am Teillenker 74 befestigten Anlaufanschlag 104 entfernt. Der Mitnehmerbügel 110 ist über eine Verlängerung 106 an das Drahtseil 92 des Bowden-Zuges angeschlossen, das aufgrund der Vorspannfeder 102 sich zusammen mit der Rastklinke 94 nach rechts in Fig. 2 bewegt und durch den Klinkeneingriff die Aufwärtsbewegung des Schwimmers 66 über die an der Betätigungsstange 28 befestigte Hülse 98 in eine Aufwärtsbewegung der Blende 24 umsetzt. Sobald der Teillenker 74 des Wiegebalkens in die gestreckte Lage zurückkehrt, bewirkt der Anlaufanschlag 104, daß die Rastklinke aus dem Eingriff mit der Betätigungsstange 100 kommt.

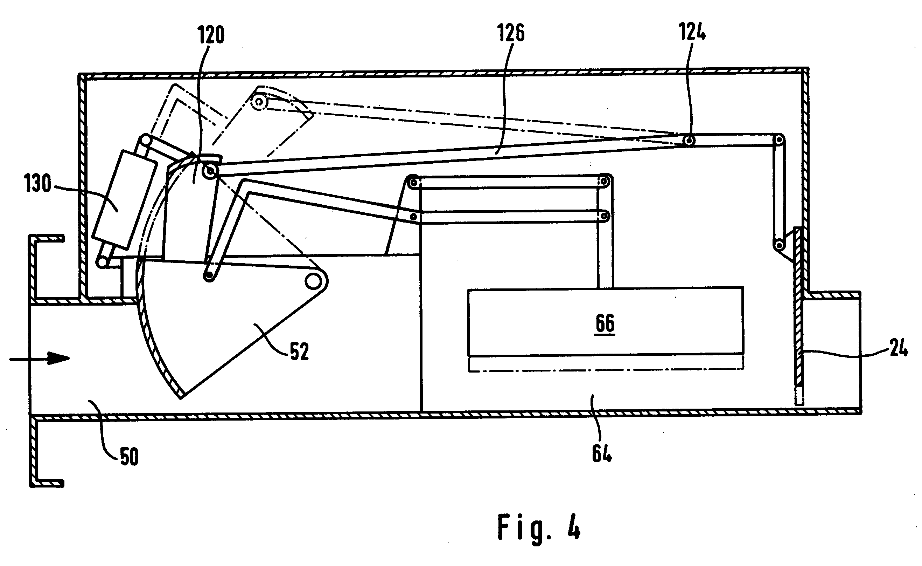

Beim Ausführungsbeispiel gemäß Fig. 4 kommen ebenfalls die wichtigsten Grundelemente der in Fig. 1 beschriebenen Ausführungsform zur Anwendung, nämlich der im Zulaufkanal angeordnete Segmentschütz 52, der in der vor dem UW-Drosselorgan 24 angeordneten Schwimmerkammer 64 befindliche UW-Schwimmer 66, der mit dem Segmentschütz 52 über einen Wiegebalken gegenläufig verstellbar ist sowie eine die Ausflußgesetzmäßigkeiten aus dem Staubehälter berücksichtigende Korrekturkurve 120, die zu feinfühliger Regelung der Blende 24 direkt am Segmentschütz 52 befestigt ist. Die Korrekturkurve 120 bewirkt, daß bei ansteigender Bewegung des Segmentschützes 52 auch die Blende 24 in Öffnungsrichtung bewegt wird bzw. und umgekehrt. Der in der Schwimmerkammer 64 erzeugte Aufstau ermöglicht über die vom Schwimmer 66 erzeugten gegenläufigen Bewegungen des Segmentschützes 52 eine Vorregelung. Sobald der Behälterabfluß einen bestimmten Wert übersteigt, wird die Abflußblende 24 gleichsinnig mit dem Segmentschütz 52 durch den Schwimmer 66 geregelt, und zwar über eine um ein Festlager 124 schwenkbare Betätigungsstange 126, die am entgegengesetzten Ende durch die Korrekturkurve 120 geführt ist. Zur Vermeidung von Regelungsschwingungen ist zwischen dem Schachtgehäuse und dem Segmentschütz ein Dämpfungselement 130 vorgesehen.

Bei geringen Abflußmengen, z. B. unterhalb von 20 l/s, vor allem bei längeren Drosselzeiten, die manchmal über mehrere Tage andauern, kann es vorteilhaft sein, wenn in bestimmten Zeitabständen kurze Spülstöße stattfinden, um Ablagerungen und Schmutz aus der Drosselleitung, dem Drosselschacht und/oder aus dem Staubehälter zur Kläranlage zu leiten. Zur Herbeiführung eines kurzen Spülstoßes wird in den vorbeschriebenen Ausführungsbeispielen die Blende 24 kurzzeitig durch Anwendung einer Hilfskraft geöffnet, z. B. mit Hilfe eines elektrisch betätigten Magneten oder eines Hydraulik- oder Pneumatikzylinders, wobei die Zeitdauer des Offenhaltens der Blende nach den örtlichen Bedürfnissen eingestellt wird. Dies gilt auch für die Frequenz der Auslösung solcher Spülstöße, die durch ein Zeitglied, z. B. eine Zeitschaltuhr eingestellt wird.

Um die Blende 24 ohne Fremdenergie vorübergehend zu öffnen, kann ein Schwimmer , z.B. der Schwimmer 66, angekoppelt werden. Zu Beginn des Spülstoßes wird die Blende 24 durch einen am Gestänge 26 angreifenden Motor hochgezogen, der z. B. ein über eine Rolle geführtes Seil mit einem angehängten Antriebsgewicht aufweist. Wenn der Schwimmer 66 bei sich entleerender Schwimmerkammer 64 absinkt, zieht er durch eine geeignete Verbindung und/oder Antriebsübersetzung den Seilmotor von neuem auf. Entsprechend der Funktion der Abflußregelung geht mit dem Absenken des Schwimmers 66 der Segmentschütz 52 nach oben, so daß ein die Drossel durchströmender erster Spülstoß aufgrund seiner Schleppkraft auch vor der Drossel befindliche Ablagerungen mitzieht.

Bei der einer ersten Zwangsöffnung der Blende 24 folgenden Absenkbewegung des Schwimmers 66 wird der Seilmotor wieder aufgezogen sowie ein den Seilmotor bis zur nächsten Auslösung festhaltendes mechanisches oder hydraulisches Zeitglied gespannt. Danach bewegt sich die Blende 24 in ihre Regelstellung zurück, wobei aufgrund der kurzzeitig verstärkten Durchströmung der Drossel in der Schwimmerkammer 64 schnell ein neuer Aufstau entsteht, durch den der Schwimmer 66 am Keilanschlag 80 die Notauslöseeinrichtung mit nochmaligem Öffnen der Blende 24 betätigt und ein vollständiges Freispülen erreicht wird.

## Patentansprüche

1. Abflußregelung für Regenspeicherbecken oder dergleichen Staubehälter, mit einer Abflußleitung (22), einem den Querschnitt der Abflußleitung verändernden Unterwasser-Drosselorgan (24) und einer vor dem UW-Drosselorgan angeordneten, einen Unterwasser-Schwimmer (66) enthaltenden Schwimmerkammer (64), in der ein künstlicher Aufstau erzeugt wird, sobald der Behälterabfluß einen vorbestimmten Wert, z.B. 2 x QTW übersteigt, wobei der UW-Schwimmer (66) als Antrieb für eine bei Verstopfungen vor dem UW-Drosselorgan (24) ansprechende und dieses über sein Betätigungsgestänge öffnende Notauslöseeinrichtung vorgesehen ist,
**dadurch gekennzeichnet,**
- daß in einem zwischen Behälterablauf und Schwimmerkammer (64) angeordneten Zulaufkanal (50) ein einstellbarer Schütz (52) vorgesehen ist,
- daß der UW-Schwimmer (66) und der Schütz (52) über ein um ein Festlager (84) schwenkbares Wiegegestänge (72, 74) zur Ausführung gegenläufiger Bewegungen so verbunden sind, daß der Schütz (52) bei steigendem Aufstau in der Schwimmerkammer (64) schließend und bei fallendem Aufstau öffnend verstellt wird,
- und daß eine als Antrieb zwischen dem Schütz (52) und dem gleichsinnig bewegten UW-Drosselorgan (24) dienende Verbindungseinrichtung eine um ein Festlager (124) schwenkbare Betätigungsstange (126) aufweist, die an ihrem dem UW-Drosselorgan (24) entgegengesetzten Ende durch eine am Schütz (52) befestigte, die Ausflußformel für sich ändernde Behälterstauhöhen berücksichtigende Korrekturkurve (120) geführt ist.

2. Abflußregelung für Regenspeicherbecken oder dergleichen Staubehälter, mit einer Abflußleitung (22), einem den Querschnitt der Abflußleitung verändernden Unterwasser-Drosselorgan (24) und einer vor dem UW-Drosselorgan angeordneten, einen Unterwasser-Schwimmer (66) enthaltenden Schwimmerkammer (64), in der ein künstlicher Aufstau erzeugt wird, sobald der Behälterabfluß einen vorbestimmten Wert, z.B. 2 x QTW übersteigt, wobei der UW-Schwimmer als Antrieb für eine bei Verstopfungen vor dem UW-Drosselorgan ansprechende und dieses über sein Betätigungsgestänge öffnende Notauslöseeinrichtung vorgesehen ist,
**dadurch gekennzeichnet,**
- daß eine Antriebsverbindung zwischen einem der Behälterstauhöhe folgenden Oberwasser-Schwimmer (36) und dem UW-Drosselorgan (24) eine die Ausflußformel für sich ändernde Behälterstauhöhen berücksichtigende Korrekturkurve (46) enthält,
- daß in einem zwischen Behälterablauf und Schwimmerkammer (64) angeordneten Zulaufkanal (50) ein einstellbarer Schütz (52) vorgesehen ist,
- und daß der UW-Schwimmer (66) und der Schütz (52) über ein um ein Festlager (84) schwenkbares Wiegegestänge (72, 74) zur Ausführung gegenläufiger Bewegungen so verbunden sind, daß der Schütz (52) bei steigendem Aufstau in der Schwimmerkammer (64) schließend und bei fallendem Aufstau öffnend verstellt wird.

3. Abflußregelung nach Anspruch 2, dadurch gekennzeichnet, daß an der vom OW-Schwimmer (36) entsprechend den Änderungen der Behälterstauhöhe mittels einer Gelenkhebelverbindung (38, 42, 44) verstellbaren Korrekturkurve (46) ein die Öffnungsweite des UW-Drosselorgans (24) direkt steuernder Hebel (28) anliegt und geführt ist.

4. Abflußregelung nach Anspruch 2 oder 3, dadurch gekennzeichnet, daß dem Wiegegestänge (72, 74) eine Bewegungen des Schützes (52) in Schließrichtung in dem Fall begrenzende Anschlagkurve (60) zugeordnet ist, daß der Aufstau in der Schwimmerkammer (64) aus einer Verstopfung vor dem UW-Drosselorgan (24) resultiert, wobei das Wiegegestänge (72, 74) einen Freilauf enthält, der bei Anlage des Wiegegestänges an der Anschlagkurve (60) voneinander unabhängige Bewegungen des Schützes (52) und des UW-Schwimmers (66) ermöglicht.

5. Abflußregelung nach Anspruch 4, dadurch gekennzeichnet, daß die Anschlagkurve (60) in Abhängigkeit von der Stellung des OW-Schwimmers (36) selbsttätig derart nachgestellt wird, daß die Öffnungsgröße des Schützes (52) einen den beabsichtigen Aufstau in der Schwimmerkammer (64) erhaltenden Wert nicht unterschreitet.

6. Abflußregelung nach einem der Ansprüche 2 bis 5, dadurch gekennzeichnet, daß das Wiegegestänge aus zwei um eine gemeinsame ortsfeste Gelenkachse (84) schwenkbaren, sich teilweise überdeckenden und in der einen Schwenkrichtung durch einen Anschlag (86) zusammengehaltenen Teillenkern (72, 74) besteht, die bei Entlastung des UW-Schwimmers (66) und Unterstützung des Schützes (52) durch die Anschlagkurve (60) gegensinnig schwenkbar bzw. zueinander knickbar sind und dabei die Notauslöseeinrichtung betätigen.

7. Abflußregelung nach einem der vorhergehenden Ansprüche, dadurch gekennzeichnet, daß die Notauslöseeinrichtung aus einem vom UW-Schwimmer (66) angetriebenen Betätigungsorgan (78) und einer mit dem Antriebsgestänge des UW-Drosselorgans (24) in Verbindung stehenden Kupplungseinrichtung (80) besteht, welche die Anstiegsbewegung des UW-Schwimmers (66) in eine Öffnungsbewegung des UW-Drosselorgans (24) umsetzt.

8. Abflußregelung nach Anspruch 7, dadurch gekennzeichnet, daß die Notauslöseeinrichtung ein vom OW-Schwimmer (36) verstellbares Keilelement (80) enthält, das zwischen dem Antriebsgestänge für das UW-Drosselorgan (24) und dem vom UW-Schwimmer (66) angetriebenen Betätigungsorgan (78) angeordnet ist.

9. Abflußregelung nach einem der Ansprüche 2 bis 8, dadurch gekennzeichnet, daß die dem UW-Drosselorgan (24) und dem Schütz (52) zugeordneten Korrektur- bzw. Anschlagkurven (46, 60) sowie das über dem Betätigungsorgan (78) des UW-Schwimmers (66) angeordnete Keilelement (80) zu gleichsinnigen Bewegungen miteinander verbunden sind.

10. Abflußregelung nach einem der vorhergehenden Ansprüche, dadurch gekennzeichnet, daß zur Erzielung kurzer Spülstöße während Zeiten geringer Abflüsse (z.B. unter 20 l/s) dem UW-Drosselorgan (24) ein Kurzzeit-Zwangsöffnungssystem zugeordnet ist, das einen aufziehbaren Stellmotor, ein die Spülstoßfrequenz bestimmendes aufziehbares Zeitglied zum Auslösen des Stellmotors und eine fremdenergiefreie Aufzieheinrichtung aufweist, die aus einem in der Schwimmerkammer (64) angeordneten Schwimmer und einem den Schwimmer mit dem Stellmotor und Zeitglied verbindenden Zugglied besteht und durch die der Zwangsöffnung des UW-Drosselorgans (24) und Entleerung der Schwimmerkammer (64) folgende Absenkbewegung des Schwimmers betätigbar ist.

11. Abflußregelung nach einem der vorhergehenden Ansprüche, dadurch gekennzeichnet, daß der einstellbare Schütz aus einem um eine waagerechte Achse schwenkbaren Segmentschütz (52) besteht.

## Claims

1. Outflow control device for rain-storing tanks or similar accumulation reservoirs comprising an outflow line (22), a downstream throttling member (24) varying the cross-section of the outflow line, and a float chamber (64) disposed before the downstream throttling member and including a downstream float (66), an artificial accumulation being created in the float chamber as soon as the tank's discharge surmounts a pre-determined value, for example 2 x dry-weather flow quantity, while the downstream float (66) is provided as drive means for an emergency release mechanism adapted to respond to obstructions in front of the downstream throttling member (24) and to open that by means of its actuating linkage,
**characterized in**
- that an adjustable sluice valve (52) is provided in an inflow channel (50) disposed between the tank outlet and the float chamber (64),
- that the downstream float (66) and the sluice valve (52) are connected to each other by means of a rocking linkage (72, 74) pivotable about a fixed bearing (84) for carrying out oppositely directed movements such that the sluice valve (52) will become adjusted in closing direction at an increasing accumulation level in the float chamber (64) and in opening direction at a falling accumulation level,
- and in that a connecting mechanism serving as drive means between the sluice valve (52) and the synonymously moved downstream throttling member (24) comprises an actuating rod (126) pivotable about a fixed bearing (124) and at its end opposite to the downstream throttling member (24) being guided by a correction cam (120) secured to said sluice valve (52) and considering the outflow formula for varying accumulation levels of the tank.

2. Outflow control device for rain-storing tanks or similar accumulation reservoirs comprising an outflow line (22), a downstream throttling member (24) varying the cross-section of the outflow line, and a float chamber (64) disposed before the downstream throttling member and including a downstream float (66), an artificial accumulation being created in the float chamber as soon as the tank's discharge surmounts a pre-determined value, for example 2 x dry-weather flow quantity, while the downstream float (66) is provided as drive means for an emergency release mechanism adapted to respond to obstructions in front of the downstream throttling member (24) and to open that by means of its actuating linkage,
**characterized** in
- that a drive connection between an upstream float (36) following the tank's accumulation level and the downstream throttling member (24) includes a correction cam (46) considering the outflow formula for varying accumulation levels of the tank,
- that an adjustable sluice valve (52) is provided in an inflow channel (50) disposed between the tank outlet and the float chamber (64),
- and in that the downstream float (66) und die sluice valve (52) are connected to each other by means of a rocking linkage (72, 74) pivotable about a fixed bearing (84) for carrying out oppositely directed movements such that the sluice valve (52) will become adjusted in closing direction at an increasing accumulation level in the float chamber (64) and in opening direction at a falling accumulation level.

3. Outflow control device according to claim 2, characterized in that a lever (28) for direct control of the aperture width of the downstream throttling member (24) rests against and is guided by the correction cam (46) adapted to be adjusted by the upstream float (36) corresponding the variations of the tank's accumulation level by means of a linkage connection (38, 42, 44).

4. Outflow control device according to claim 2 or 3, characterized in that a stop cam (60) is associated to the rocking linkage (72, 74) for limiting movements of the sluice valve (52) in closing direction in the event, when the accumulation level in the float chamber (64) results from an obstruction in front of the downstream throttling member (24), wherein the rocking linkage (72, 74) includes a free-running system allowing movements of the sluice valve (52) and the downstream float (66) independent from each other, when the rocking linkage abuts the stop cam (60).

5. Outflow control device according to claim 4, characterized in that the stop cam (60) will become automatically re-adjusted depending from the position of the upstream float (36) such that the aperture width of the sluice valve (52) does not fall below a value necessary to maintain the intended accumulation level in the float chamber (64).

6. Outflow control device according to one of the claims 2 to 5, characterized in that the rocking linkage consists of two partial links (72, 74) partially overlapping each other, adapted to pivot about a common stationary joint axis (84), being kept together in the one pivoting direction by means of a stop (86), and adapted to pivot opposingly or to buckle with respect to each other and to thereby actuate the emergency release mechanism, when the downstream float (66) is relieved and the sluice valve (52) is supported by the stop cam (60).

7. Outflow control device according to one of the preceding claims, characterized in that the emergency release mechanism consists of an actuating member (78) driven by the downstream float (66) and a coupling means (80), which is connected to the actuating linkage of the downstream throttling member (24) and transforms the rising movement of the downstream float (66) into an opening movement of the downstream throttling member (24).

8. Outflow control device according to claim 7, characterized in that the emergency release mechanism includes a wedge element (80) adjustable by the upstream float (36) and disposed between the actuating linkage of the downstream throttling member (24) and the actuating member (78) driven by the downstream float (66).

9. Outflow control device according to one of the claims 2 to 8, characterized in that the correction and stop cams (46, 60) associated to the downstream throttling member (24) and the sluice valve (52), respectively, as well as the wedge element (80) disposed above the actuating member (78) of the downstream float (66) are connected to each other for synonymous movements.

10. Outflow control device according to one of the preceding claims, characterized in that for generating short flushing pulses during periods of small outflow quantities (for example lower than 20 l/s) a positively actuated temporrary opening system is associated to the downstream throttling member (24) and comprises a wind-up servo-motor, a wind-up timing member for tripping the servo-motor to determine the frequence of the flushing pulses, and a wind-up mechanism actuatable without separate energy consisting of a float disposed in the float chamber (64) and a tension member connecting said float to the tension motor and the timing member and adapted to be actuated by the lowering movement of the float, which follows after the positively actuated opening of the downstream throttling member (24) and the emptying of the float chamber (64).

11. Outflow control device according to one of the preceding claims, characterized in that the adjustable sluice valve consists of a segmental valve (52) pivotable about a horizontal axis.

## Revendications

1. Dispositif de régulation de l'écoulement pour une citerne d'eau de pluie ou un réservoir d'accumulation similaire, avec une conduite d'écoulement (22), un organe d'étranglement situé sous l'eau (24) qui modifie la section de la conduite d'écoulement et une chambre de flotteur (64) disposée avant l'organe d'étranglement situé sous l'eau, contenant un flotteur situé sous l'eau (66), dans laquelle une accumulation artificielle est produite dès que l'écoulement du réservoir dépasse une valeur prédéterminé, par exemple 2 x QTW, le flotteur situé sous l'eau (66) étant prévu comme entraînement pour un dispositif de déclenchement de secours qui se déclenche lorsque l'organe d'étranglement situé sous l'eau (24) est bouché et ouvre celui-ci à l'aide de sa tige d'actionnement, caractérisé en ce que
- il est prévu dans un canal d'admission (50) disposé entre l'écoulement du réservoir et la chambre du flotteur (64) une vanne (52) réglable,
- en ce que le flotteur situé sous l'eau (66) et la vanne (52) sont reliés par une tige basculante (72, 74) pivotant autour d'un support fixe (84) pour réaliser des mouvements réciproques, de telle sorte que la vanne (52) soit déplacée dans le sens de la fermeture lorsque l'accumulation augmente dans la chambre du flotteur (64) et dans le sens de la fermeture lorsque l'accumulation diminue,
- et en ce qu'un dispositif de liaison servant d'entraînement entre la vanne (52) et l'organe d'étranglement situé sous l'eau (24) déplacé présente une tige d'actionnement (126) pivotant autour d'un palier fixe (124), qui est guidée à son extrémité opposée à l'organe d'étranglement situé sous l'eau (24) par une courbe de correction (120) fixée à la vanne (52) et prenant en compte la formule d'écoulement pour les hauteurs d'accumulations changeantes.

2. Dispositif de régulation de l'écoulement pour une citerne d'eau de pluie ou un réservoir d'accumulation similaire, avec une conduite d'écoulement (22), un organe d'étranglement situé sous l'eau (24) qui modifie la section de la conduite d'écoulement et une chambre de flotteur (64) disposée avant l'organe d'étranglement situé sous l'eau, contenant un flotteur situé sous l'eau (66), dans laquelle une accumulation artificielle est produite dès que l'écoulement du réservoir dépasse une valeur prédéterminé, par exemple 2 x QTW, le flotteur situé sous l'eau (66) étant prévu comme entraînement pour un dispositif de déclenchement de secours qui se déclenche lorsque l'organe d'étranglement situé sous l'eau (24) est bouché et ouvre celui-ci à l'aide de sa tige d'actionnement, caractérisé en ce que
- une liaison d'entraînement entre un flotteur situé au-dessus de l'eau (36) qui suit la hauteur d'accumulation du réservoir et l'organe d'étranglement situé sous l'eau (24) comprend une courbe de correction (46) prenant en compte la formule d'écoulement pour des hauteurs d'accumulation variables dans le réservoir,
- en ce qu'une vanne (52) réglable est prévue dans un canal d'admission (50) disposé entre l'écoulement du réservoir et la chambre du flotteur (64),
- et en ce que le flotteur situé sous l'eau (66) et la vanne (52) sont reliés par une tige basculante (72, 74) pivotant autour d'un support fixe (84) pour réaliser des mouvements réciproques, de telle sorte que la vanne (52) soit déplacée vers la position de fermeture lorsque l'accumulation augmente dans la chambre du flotteur (64) et vers la position d'ouverture lorsque l'accumulation diminue.

3. Dispositif de régulation de l'écoulement selon la revendication 2, caractérisé en ce qu'un levier (28) commandant directement la largeur d'ouverture de l'organe d'étranglement situé sous l'eau (24) repose sur la courbe de correction (46) pouvant être déplacée par le flotteur situé au-dessus de l'eau (36) en fonction des modifications de la hauteur d'accumulation dans le réservoir au moyen d'une liaison par levier articulé (38, 42, 44) et est guidé sur celle-ci.

4. Dispositif de régulation de l'écoulement selon la revendication 2 ou 3, caractérisé en ce que la tige basculante (72, 74) est associée à une courbe de butée (60) limitant les mouvements de la vanne (52) dans le sens de la fermeture dans le cas où l'accumulation dans la chambre de flotteur (64) résulte d'une obstruction avant l'organe d'étranglement situé sous l'eau (24), la tige basculante (72, 74) comportant une course libre qui permet des mouvements indépendants l'un de l'autre de la vanne (52) et du flotteur situé sous l'eau (66) lorsque la tige basculante s'appuie sur la courbe de butée (60).

5. Dispositif de régulation de l'écoulement selon la revendication 4, caractérisé en ce que la courbe de butée (60) est de préférence régulée automatiquement en fonction de la position du flotteur situé au-dessus de l'eau (36), de telle sorte que la grandeur d'ouverture de la vanne (52) ne soit pas inférieure à une valeur maintenant l'accumulation prévue dans la chambre de flotteur (64).

6. Dispositif de régulation de l'écoulement selon l'une ou l'ensemble des revendications 2 à 5, caractérisé en ce que la tige basculante se compose de deux guides partiels (72, 74) pivotant autour d'un axe d'articulation fixe (84) commun, se recouvrant partiellement et retenus ensemble par une butée (86) dans un sens de pivotement, qui peuvent pivoter à contre-sens ou se replier l'un vers l'autre lors de la décharge du flotteur situé sous l'eau (66) et du soutien de la vanne (52) par la courbe de butée (60) et actionnent alors le dispositif de déclenchement de secours.

7. Dispositif de régulation de l'écoulement selon l'une ou l'ensemble des revendications précédentes, caractérisé en ce que le dispositif de déclenchement de secours se compose d'un organe d'actionnement (78) entrainé par le flotteur situé sous l'eau (66) et d'un dispositif d'accouplement (80) relié à la tige d'entraînement de l'organe d'étranglement situé sous l'eau (24), qui convertit le mouvement d'ascension du flotteur situé sous l'eau (66) en un mouvement d'ouverture de l'organe d'étranglement situé sous l'eau (24).

8. Dispositif de régulation de l'écoulement selon la revendication 7, caractérisé en ce que le dispositif de déclenchement de secours comporte un élément formant cale (80) qui peut être déplacé par le flotteur situé au-dessus de l'eau (36) et qui est disposé entre la tige d'entraînement pour l'organe d'entraînement situé sous l'eau (24) et l'organe d'actionnement (78) entraîné par le flotteur situé sous l'eau (66).

9. Dispositif de régulation de l'écoulement selon l'une ou l'ensemble des revendications 2 à 8, caractérisé en ce que les courbes de correction et de butée (46, 60) associées à l'organe d'étranglement situé sous l'eau (24) et à la vanne (52) ainsi que l'élément formant cale (80) disposé au-dessus de l'organe d'actionnement (78) du flotteur situé sous l'eau (66) sont reliés ensemble pour effectuer des mouvements dans le même sens.

10. Dispositif de régulation de l'écoulement selon l'une ou l'ensemble des revendications précédentes, caractérisé en ce que pour obtenir des coups de rinçage de courte durée aux moments où l'écoulement est réduit, l'organe d'entraînement situé sous l'eau (24) est associé à un système d'ouverture forcée de courte durée qui présente un moteur de commande pouvant être remonté, un élément temporisateur pouvant être remonté qui détermine la fréquence des coups de rinçage et qui est destiné à déclencher le moteur de commande et un dispositif de remontage sans énergie externe, qui se compose d'un flotteur disposé dans la chambre de flotteur (64) et d'un élément de traction reliant le flotteur au moteur de commande et à l'élément temporisateur et qui peut être actionné par l'abaissement du flotteur consécutif à l'ouverture forcée de l'organe d'étranglement situé sous l'eau (24) et à la vidange de la chambre du flotteur (64).

11. Dispositif de régulation de l'écoulement selon l'une ou l'ensemble des revendications précédentes, caractérisé en ce que la vanne réglable se compose de manière appropriée d'une vanne à segment (52) basculant autour d'un axe horizontal.
